# EUROPEAN PATENT SPECIFICATION

(11) **EP 4 471 221 B1**
(45) Date of publication and mention of the grant of the patent: **19.11.2025**
(21) Application number: 24177156.7
(22) Date of filing: 21.05.2024
(51) Int. Cl.: E04B 1/80, C04B 28/02, E04C 2/16, E04C 2/24

(54) **PREFABRICATED ELEMENT FOR COVERING BUILDING ENVELOPES AND PROCEDURE FOR OBTAINING IT**
VORGEFERTIGTES ELEMENT ZUR ABDECKUNG VON GEBÄUDEHÜLLEN UND VERFAHREN ZU SEINER HERSTELLUNG
ELÉMENT PRÉFABRIQUÉ DE REVÊTEMENT D'ENVELOPPES DE BÂTIMENTS ET PROCÉDÉ POUR SON OBTENTION

(30) Priority: 23.05.2023 ES 202330401
(43) Date of publication of application: 04.12.2024
(73) Proprietor: Instituto Tecnológico Metalmecánico, Mueble Madera, Embalaje y Afines - AIDIMME, 46980 Paterna Valencia (ES)
(72) Inventor: GUERRERO RAMOS, Juan Carlos, 46980 Paterna (ES); PASCUAL PASTOR, Ana María, 46980 Paterna (ES); PÉREZ CAMPOS, Rosa María, 46980 Paterna (ES); SERRA MERCÉ, Enrique, 46980 Paterna (ES)
(74) Representative: Polo Montañes, Carlos

(56) References cited:
- CN-A- 108 640 618
- DE-A1- 102017 129 362
- DE-A1- 19 526 541
- GB-A- 2 234 276

## Description

### FIELD OF THE ART

The present invention is intended for the construction sector and specifically for building envelope thermal insulation systems, both externally and internally, being likewise applicable to both walls and floors, ceilings, or any type of surface.

The main object of the present invention relates to a prefabricated cladding element for buildings that provides thermal insulation using materials originating from waste from other industries, including a biological material, and it stands out due to its easy and quick placement on the existing substrate by means of a system of profiles that serves for fixing the element.

The invention likewise relates to a method of obtaining the cladding element.

### BACKGROUND OF THE INVENTION

In general, many of the buildings constructed in the last decades lose heat in winter and allow heat penetration in summer, favoring thermal oscillations and accordingly reducing the internal comfort of the inhabitants. This is the result of poor building insulation and leads to an increased energy consumption due to the use of heating or air conditioning having associated therewith the subsequent economic cost and environmental impact. The development of insulation systems responds to the need to minimize heat flows generated through the building envelope. These systems can be incorporated in the design of new buildings or in already existing buildings.

External insulation is usually carried out through ETIS (External Thermal Insulation System) elements or ventilated façades. ETIS systems consist of an external insulation system composed of a panel made of an insulating material adhered to a wall by means of an adhesive and mechanical fixing. The insulating material is externally coated by means of applying a base reinforcement layer that homogenizes stresses and an outer waterproof layer that protects against external agents.

Generally, the most widely used insulating materials use polymer materials of a petrochemical origin with low thermal conductivity, but with a high carbon footprint compared to other natural materials, and which, in their reaction to fire, frequently and without the adequate thermal barrier, present a high degree of flammability and ease of fire propagation.

As an alternative to petrochemical products, insulating materials have been developed from natural materials such as merino sheep wool, washed-up Posidonia oceanica, rice straw, rice husk, cork oak bark (cork), among others. The use of wool in the textile industry has decreased and the price fluctuates, so its application as an insulating material represents an alternative use. However, the treatment required for wool obtained directly from the shearer involves a high consumption of hot water > 50 I/kg and labor > 2 h/kg. Cork, on the other hand, is a material of great industrial value and although it is renewable, its production is decreasing gradually.

Rice is the third of the primary products in worldwide production, only behind sugarcane and corn, with more than 740 million tons per year (Buratti *et al.,* 2018). Rice straw is a material that is not sufficiently utilized, is disposed of or intended for agricultural purposes, has insulating properties, but the rigidity of its fibers leads to a bulk use in filling very thick and hard-to-handle partitions or requires processing. However, rice husk is a fiber with a smaller size, which allows its direct use for the composition of insulating panels, particularly prefabricated panels. Rice husk is the grain covering and its main components are silicon, cellulose, and lignin, which provides it with good thermal and fire resistance. For rice producers, rice husk is considered waste, but it has gradually become an interesting alternative for other economic sectors such as the poultry sector, the floriculture sector, mixed with broken rice as livestock feed, silicon carbide filament for tools, fuel using the ashes thereof as a fertilizer, as an aggregate or binder for board manufacturing and construction (César *et al.,* 2017); however, in most cases rice husk is used in low-value applications, therefore, with this invention and relying on studies conducted up until now (Buratti *et al.,* 2018), it is proposed as an insulating material for the cladding system.

Regarding the use of rice husk for manufacturing composite boards, it is used in combination with another type of particles, cork, and recycled rubber granulate, mixed with polyurethane TDI (toluene diisocyanate) (António *et al.,* 2018) with good thermal and acoustic behaviors. Mixing husk with wood particles and adhesives also offers mechanical improvements in particleboard manufacturing (Johnson & Yunus, 2009) (Keskin *et al.,* 2015).

In recent years, the study of rice husk as an element for construction has increased due to its high availability, low bulk density (90-150 kg/m³), tenacity, and weather resistance, being the object of research as an insulating element due to its physical and mechanical properties (Buratti *et al.,* 2018) (Muthuraj *et al.,* 2019) (Choi *et al.,* 2006) and its fireproof character (Keskin *et al.,* 2015), with a thermal conductivity of 0.046-0.059 W/mK. The research conducted on rice husk is not as numerous as the papers on rice straw as an insulating material, but the advantages observed drive the continuation and intensification of its study and application. In this sense, the research by (Buratti *et al.,* 2018) on insulating material based on rice husk agglomerated with a polyurethane glue in an aqueous solution at 2.5% of the total weight, which obtained thermal conductivity and acoustic insulation values of the same order as other materials such as cork, should be mentioned. Said paper also compared the carbon emission (kg CO₂eq) and energy cost (MJ) of different insulating materials manufactured with waste of different origins, such that, for the same thermal and acoustic characteristics, rice husk, together with coffee straw, showed the lowest carbon emission and energy cost, thereby justifying the sustainability of rice husk.

The use of rice husk as an insulating panel fiber has been patented under different formulas, such as patents WO2014109443A1 (rice husk and straw are mixed with collagen), KR200439244Y1 (use of husk in bulk without agglomeration), or DE4322907A1. In all of said patents, the invention corresponds exclusively to the insulating material, not to the constructive solution. GB 2 234 276 A and CN 108 640 618 A discloses further prefabricated cladding elements comprising rice husk and corresponding methods of manufacture.

Another application of the husk as a construction material is its incorporation into mortar as a component thereof, like in the case of patent CN19208771A and patent CN108424168A, which allow obtaining mortar that is more lightweight and resistant to thermal flow. In the case of patent CN19208771A, the mortar with husk is part of a multilayer insulating system in which the insulating function is performed by the polyurethane and expanded polystyrene plate, which makes the system less sustainable and a higher contribution to fire than the element object of this document.

In the invention claimed herein the rice husk insulating material represents only a part of the cladding system.

The most widely used insulating cladding systems are mostly designed for on-site execution, which means a longer occupation time of spaces and a greater impact on the occupants of the buildings, higher cost of labor to travel to the location, and lower precision in the execution. On-site installation involves the following operations: firstly, the insulating material is fixed to the surface with an adhesive (usually polyurethanes with a high carbon footprint) or by means of the combination of an adhesive and mechanical fixing (dowel or profiles); secondly, a reinforcing base layer, consisting of a fiberglass mesh embedded in mortar that improves the mechanical characteristics thereof and causes stresses to be uniform, is applied; and finally, a finishing layer which protects the system by waterproofing it is applied.

Prefabrication reduces installation times and increases quality. An example of a prefabricated cladding system is the development carried out in the European INNOWEE project, completed in 2020, which relates to a prefabricated module with expanded polystyrene, EPS, insulating material and high-density geopolymer mortar with recycled aggregate, which improved its environmental sustainability. The assembly is installed using an adhesive and dowels. Its novelty lies in the use of recycled aggregates and the prefabrication of the finished module, where the on-site execution of the base frame layer and the finishing layers is not necessary. The drawback of the system is the carbon footprint of the EPS insulation and the use of adhesives during installation.

### DESCRIPTION OF THE INVENTION

The invention relates to a prefabricated cladding system for a building envelope comprising an insulating material for the thermal insulation of buildings and a reinforcement-finishing layer that renders the surface of the building waterproof and protects it, with a machined fixing system in which the prefabricated element is embedded for placement thereof inside or outside the envelope.

The raw material used for the insulating material is a renewable plant fiber, specifically rice husk originating from waste from the rice industry which, as long as it is in a dry state, does not require any energy-consuming treatment.

To form the panels and to achieve a suitable density that confers consistency thereto, the husk is agglomerated with an adhesive. By way of example, agglomeration is performed at a proportion of less than 20% of the mass of rice husk, with pressing at a pressure of 250 kg/m² and a temperature of 80ºC for 60 minutes for a thickness of 50 mm, using a polyurethane adhesive. The part is removed from the mold after 4 hours and kept in a chamber at a temperature of 23ºC and a relative humidity of 50% until stabilization. The density studied for the target application is 290 kg/m³.

Conductivity values were measured through a heat flow meter which determines the density of heat flow through the temperature difference generated by the density of the ratio of the heat flow through the sample. For a density of 290 kg/m³, the conductivity value is 0.055 W/mK and the thermal resistance is 0.909 m²K/W.

Another important aspect of the rice husk panel is its dimensional stability, the variation of the measurements for three dimensions (I length, b width, d thickness) according to the UNE-EN 1604 standard is Δεₗ = Δε_{b} = 0.15% and Δε_{d} = 0.8%, values which are within the measurement interval indicated in the standard (Δεₗ, Δε_{b}, and Δε_{d} between -1% and 2.1%).

The mortar cladding protects the husk from the outside; however, rice husk as a plant fiber will have to be protected from fungal attack and this is achieved by means of microcapsules of thymol, a plant extract, or similar natural biocide, which completely prevents fungal growth.

Mortar manufactured with aggregates originating from construction and demolition waste is used for the reinforcement-finishing layer. Solely by way of example, the dimensions of the layer may be in the order of 8 mm thick with a 2 mm slot and a 3 mm wall on each side, which requires aggregates having a maximum particle size of 2 mm. The mortar is metered with a 60% by volume replacement of the aggregate content with sand originating from construction waste and the other 40% with natural limestone sand. The results of the compression tests on the different mixes reflect a mean resistance of 24 MPa at 7 days and 30 MPa at 28 days.

The mortar must have a highly fluid consistency so that the slot is filled without cavities appearing.

The mortar is poured into molds that act as a formwork and the rice husk insulating material is placed thereon before the mortar starts to set. A weight is left to rest on the husk for at least 4 days to ensure the solidarity between the layer of mortar and the rice husk insulating material throughout the entire contact surface thereof. No additional element is used for the adhesion of both materials, with the processes taking place during setting alone leading to the attachment.

The prefabricated element is designed to be fixed to the substrate by means of the fitting of the slot made on the longitudinal edges of the layer of mortar in the metal profile. This fixing system is carried out at the upper and lower edges of the layer of mortar.

The conductivity of the mortar-rice husk assembly is 0.08 W/mK and the mean thermal resistance is 0.7335 m²K/W.

The study of the response of the assembly to fire by means of the SBI test (single burning item, UNE-EN: 13823:2012+A1:2016), which evaluates the reaction to fire by means of exposure to the thermal attack caused by a single burning object, reveals class B-s1 characteristics, d0 according to the classification established by the UNE-EN 13501-1 standard. Parameters such as heat emission, smoke production, lateral flame propagation, and falling inflamed particles and droplets are analyzed.

The external cladding fixing system is designed with metal profiles that are easy to install by means of screwing to the façade, wall, or substrate. The cladding panels are fitted in the profiles by simply allowing the panels to rest on the profile and ensuring the position thereof with the groove of the mortar.

The following advantages are derived from this structuring:
- The prefabrication of the cladding system (insulation + reinforcement-finishing layer) involves shorter execution periods, with a shorter occupation of spaces and interruption of other activities that are performed inside or outside the buildings.
- Lower exposure of operators to working conditions that may involve certain risk.
- Improved finishing, which results in greater durability and better esthetics.
- Low thermal conductivity and increased heat flow resistance, therefore, improved thermal insulation.
- Good acoustic properties.
- Good reaction to fire characteristics, with the mortar inhibiting heat propagation, and good husk behavior with a reduced contribution to flammability.
- Suitable durability and mechanical performance.
- Contribution to rice husk waste management by applying one of the highest steps of the waste hierarchy such as reuse and thus preventing the burning of rice husk and the associated CO₂ emission.
- Contribution to construction and demolition waste management.
- Reduced carbon footprint and environmental impact in the production of the insulating material.
- Reduction in aggregate consumption and quarry exploitation and the associated environmental impact.

### DESCRIPTION OF THE DRAWINGS

To complement the description that will be made below and for the purpose of helping to better understand the features of the invention according to a preferred practical embodiment thereof, a set of drawings is attached as an integral part of said description in which the following is depicted in an illustrative and non-limiting manner:
Figure 1 shows a profile view of a detail of a prefabricated element for the cladding of building envelopes made according to the object of the invention.
Figure 2 shows a perspective view of two prefabricated elements installed on a wall.
Figure 3 shows a perspective view of another detail of the prefabricated element at the level of one of its upper ends.
Figure 4 shows a perspective view of a detail of the prefabricated element at the level of one of its lower ends.

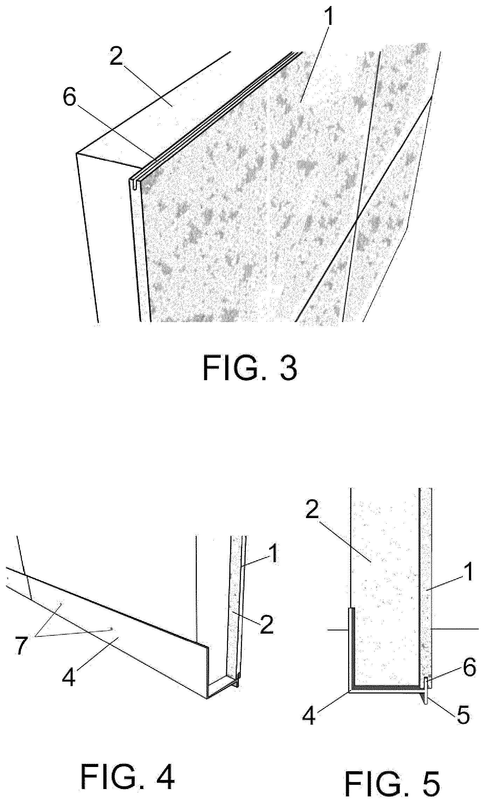

Lastly, Figure 5 shows a profile view of the detail of Figure 4.

### PREFERRED EMBODIMENT OF THE INVENTION

In view of the mentioned figures and merely by way of example, a prefabricated element for the cladding of building envelopes, the dimensions of which were set under functional (good insulation), constructive, and esthetic criteria, is described below. The parts must have dimensions suitable for handling by a single person, both in terms of volume and in terms of weight. Moreover, it was the intention to respect the common dimensions in such elements, as well as to maintain the golden ratio. These modules or panels are obtained from a sheet or layer of mortar (1) to which a layer of insulating material (2) based on binder-agglomerated rice husk is fixed.

To determine the thicknesses, reference values used in ETIS systems were adopted. Transmittance was verified. The thickness of the insulating material was set by the thermal insulation, whereas the thickness of the mortar was also conditioned by the weight and fixing-related construction reasons. By means of an iterative process and for the purpose of achieving a solution with optimal density/conductivity/material consumption, the following dimensions were adopted: thickness of the insulating material (2) 30-50 mm and thickness of the mortar (1) 8-10 mm.

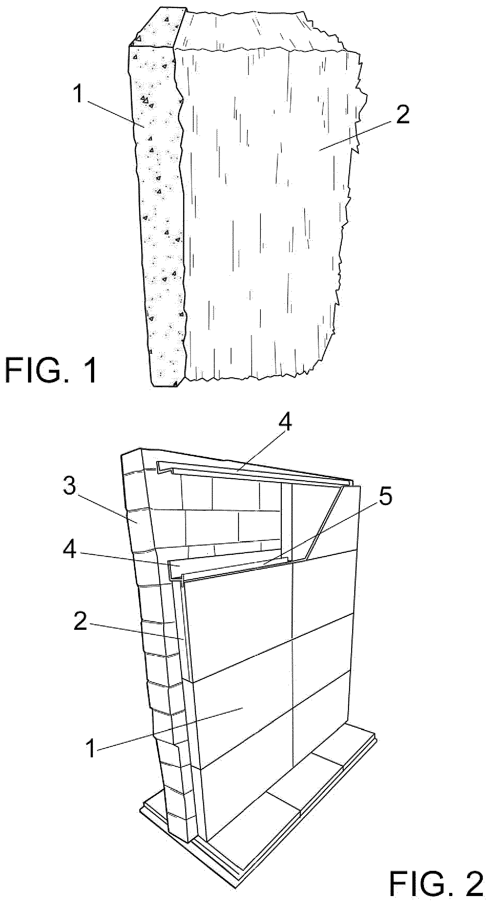

According to Figures 2, 4, and 5, the prefabricated element is complemented with a metal angle (4), in this example, having a side measuring 60 mm and a thickness of 2 mm, acting as an insulating material support tray, the free end of which on its horizontal branch ends in a securing flat (5) having a width of 15 mm and a thickness of 1.5 mm that fits in a groove (6) provided at the edge of the mortar cladding (1), ensuring the support of the entire insulating material and the protection thereof, while at the same time fixing the position of the element as a whole. The flat is embedded in the mortar, the joint being sealed to prevent any thermal bridge.

Likewise, this groove (6) will be arranged in correspondence with the upper edge of the element for facilitating the assembly and providing stability to the assembly by means of the angle (4) that is immediately above.

These profiles or angles (4) will include holes (7) that allow them to be screwed to the surface (3), as shown in Figure 4, thereby facilitating the installation of the prefabricated elements.

As for the compositions of each layer, the layer of insulating material (2) is composed of binder-agglomerated rice husk.

In turn, the layer of mortar (1) is carried out in a mortar manufactured from water, cement, and aggregate, with 60% being recycled aggregate originating from construction and demolition waste.

As for the manufacturing process, the insulating material and the layer of mortar making up the element are not adhered to one another with any additional material, rather both parts are connected by arranging the panel of insulating material on the layer of mortar during the curing process, such that the physicochemical reactions that occur on the surface of interaction between both materials, the husk and mortar, are sufficient to ensure the connection.

## Claims

1. A method of obtaining a prefabricated element for the cladding of building envelopes, **characterized in that** the following operative phases are established in the method:
a) The method starts from rice husk received directly from the rice industry without prior treatment;
b) The husk is agglomerated with an adhesive in a mold by means of pressing to the intended thickness, after which it is removed from the mold and kept in temperature- and humidity-controlled conditions until its complete stabilization and an anti-fungal product is applied thereon;
c) A mass of mortar manufactured with aggregates originating from construction and demolition waste is poured into molds such that before the mortar starts to set the rice husk insulating material obtained in step b) is placed thereon, such that the mortar and insulating material adhere to one another naturally in the mortar setting process without the use of adhesives.

2. A prefabricated element for the cladding of building envelopes obtained from the method according to claim 1, **characterized in that** it is made up of a multilayer panel-type body having therein a layer of mortar (1) to which a layer of insulating material (2) based on binder-agglomerated rice husk is fixed.

3. The prefabricated element for the cladding of building envelopes according to claim 2, **characterized in that** the layer of mortar (1) includes grooves (6) on its upper and lower edges determining coupling means for metal angles (4), the vertical branch of which includes holes (7) for fixing to the corresponding surface, and the horizontal branch of which determines a panel support tray, which horizontal branch ends in a flat (5) that can be fitted in the grooves (6) of the layer of mortar (1).

4. The prefabricated element for the cladding of building envelopes according to claim 2, **characterized in that** the rice husk is agglomerated with a binding adhesive at less than 20% of the weight of the mass of insulating material (2).

5. The prefabricated element for the cladding of building envelopes according to claims 2 and 4, **characterized in that** a natural anti-fungal product is applied on the layer of insulating material (2), the binder-agglomerated rice husk.

6. The prefabricated element for the cladding of building envelopes according to claim 2, **characterized in that** the mortar (1) is obtained from water, cement, and recycled aggregate in a percentage of 60% of the total aggregate.

## Patentansprüche

1. Verfahren zur Herstellung eines vorgefertigten Elements zur Verkleidung von Gebäudehüllen, **dadurch gekennzeichnet, dass** die folgenden Betriebsphasen im Verfahren geschafft werden:
a) das Verfahren geht von Reishülse aus, welche direkt von der Reisindustrie ohne vorherige Behandlung erhalten wird;
b) die Hülse wird mit einem Klebstoff in einer Form mittels Pressens auf die vorgesehene Dicke agglomeriert, woraufhin sie von der Form entfernt wird und in temperatur- und feuchtigkeitskontrollierten Bedingungen bis deren vollständige Stabilisation gehalten wird und ein antimykotisches Produkt wird darauf aufgetragen;
c) eine Masse aus Mörtel hergestellt mit Zuschlagstoffen stammend von Bau- und Abbruchabfall wird in Formen gegossen, sodass bevor der Mörtel anfängt sich zu härten, das Reishülsenisoliermaterial erhalten in Schritt b) darauf platziert wird, sodass der Mörtel und das Isoliermaterial naturgemäß im Mörtelhärtungsprozess ohne die Verwendung von Klebstoffen aneinanderhaften.

2. Vorgefertigtes Element zur Verkleidung von Gebäudehüllen hergestellt aus dem Verfahren nach Anspruch 1, **dadurch gekennzeichnet, dass** es aus einem mehrschichtigen paneelartigen Körper besteht, welcher darauf eine Schicht aus Mörtel (1) aufweist, an welcher eine Schicht aus Isoliermaterial (2) basierend auf mit Bindemittel agglomerierter Reishülse fixiert wird.

3. Vorgefertigtes Element zur Verkleidung von Gebäudehüllen nach Anspruch 2, **dadurch gekennzeichnet, dass** die Schicht aus Mörtel (1) Nuten (6) auf deren oberen und unteren Rändern beinhaltet, welche Kopplungsmittel für metallische Winkelstücke (4) bestimmen, deren vertikaler Schenkel Löcher (7) zur Fixierung an der entsprechenden Oberfläche beinhaltet, und deren horizontaler Schenkel eine Auflageplatte für das Paneel bestimmt, welcher horizontale Schenkel in einer Platine (5) endet, welche in die Nuten (6) der Schicht aus Mörtel (1) eingepasst werden kann.

4. Vorgefertigtes Element zur Verkleidung von Gebäudehüllen nach Anspruch 2, **dadurch gekennzeichnet, dass** die Reishülse mit einem Bindungsklebstoff bei weniger als 20 % des Gewichts des Masse aus Isoliermaterial (2) agglomeriert wird.

5. Vorgefertigtes Element zur Verkleidung von Gebäudehüllen nach den Ansprüchen 2 und 4, **dadurch gekennzeichnet, dass** ein natürliches antimykotisches Produkt auf der Schicht aus Isoliermaterial (2), der mit Bindemittel agglomerierten Reishülse, aufgetragen wird.

6. Vorgefertigtes Element zur Verkleidung von Gebäudehüllen nach Anspruch 2, **dadurch gekennzeichnet, dass** der Mörtel (1) aus Wasser, Zement und recyceltem Zuschlagstoff in einem Anteil von 60 % des gesamten Zuschlagstoffes erhalten wird.

## Revendications

1. Procédé d'obtention d'un élément préfabriqué de revêtement d'enveloppes de bâtiments, **caractérisé en ce que** les phases opératoires suivantes sont établies dans le procédé :
a) le procédé commence à partir de balle de riz reçue directement de l'industrie du riz sans traitement préalable ;
b) la balle est agglomérée avec un adhésif dans un moule par le biais de pression jusqu'à l'épaisseur souhaitée, après quoi elle est retirée du moule et maintenue dans des conditions de température et humidité contrôlées jusqu'à la stabilisation complète et un produit antifongique est appliqué sur celle-ci ;
c) une masse de mortier fabriquée avec des granulats provenant des déchets de construction et de démolition est versée dans des moules de sorte qu'avant que le mortier commence à durcir, le matériau d'isolement de balle de riz obtenue dans l'étape b) est placé sur celui-ci, de sorte que le mortier et le matériau d'isolement adhèrent naturellement l'un à l'autre dans le procédé de durcissement du mortier sans utilisation d'adhésifs.

2. Élément préfabriqué de revêtement d'enveloppes de bâtiments obtenu par le biais du procédé selon la revendication 1, **caractérisé en ce qu'**il est constitué d'un corps de type panneau multicouche ayant dans celui-ci une couche de mortier (1) à laquelle est fixée une couche de matériau d'isolement (2) à base de balle de riz agglomérée par liant.

3. Élément préfabriqué de revêtement d'enveloppes de bâtiments selon la revendication 2, **caractérisé en ce que** la couche de mortier (1) comporte des rainures (6) dans ses bords supérieur et inférieur déterminant des moyens d'attachement pour des corniers en métal (4), dont la branche verticale comporte des trous (7) pour la fixation à la surface correspondante, et dont la branche horizontale détermine un plateau de support de panneau, dont la branche horizontal se termine dans un méplat (5) qui peut être engagé dans les rainures (6) de la couche de mortier (1).

4. Élément préfabriqué de revêtement d'enveloppes de bâtiments selon la revendication 2, **caractérisé en ce que** la balle de riz est agglomérée avec un adhésif liant à moins de 20 % du poids de la masse de matériau d'isolement (2).

5. Élément préfabriqué de revêtement d'enveloppes de bâtiments selon les revendications 2 et 4, **caractérisé en ce qu'**un produit antifongique naturel est appliqué sur la couche de matériau d'isolement (2), la balle de riz agglomérée par liant.

6. Élément préfabriqué de revêtement d'enveloppes de bâtiments selon la revendication 2, **caractérisé en ce que** le mortier (1) est obtenu à partir de l'eau, du ciment, et du granulat recyclé dans un percentage de 60 % du granulat total.
